# EUROPEAN PATENT APPLICATION

(11) **EP 4 614 695 A1**
(43) Date of publication of application: **10.09.2025**
(21) Application number: 24161207.6
(22) Date of filing: 04.03.2024
(51) Int. Cl.: H01M 50/209, H01M 50/291, H01M 50/293, H01M 10/04, B60L 50/64, H01M 10/613, H01M 10/625, H01M 10/647, H01M 10/6568

(54) **BATTERY SYSTEM WITH COMPENSATOR**

(71) Applicant: Samsung SDI Co., Ltd., Yongin-si, Gyeonggi-do 17084 (KR)
(72) Inventor: Reinprecht, Stefan, 8144 Attendorf (AT); Reinprecht, Wolfgang, 8144 Attendorf (AT)
(74) Representative: Gulde & Partner

(57) **Abstract**

The present disclosure refers to a battery system (100) including at least one battery cell stack (10, 10') having a plurality of battery cells (12) accommodated in a compartment (16). At least one compensator (20) is located at an end (13) of a respective battery cell stack (10, 10') wherein the at least one compensator (20) includes a flexible membrane (22) coupled to a membrane carrier (26) to define a variable volume (24) that is filled with a fluid. The at least one compensator (20) is configured to expand in response to the fluid pressure rising in the flexible membrane (22) and contract in response to the fluid pressure reducing in the flexible membrane (22). One among at least one compensator (20) is positioned at the end (13) of the at least one battery cell stack (10) to exert a pressing force on the at least one battery cell stack (10).

## Description

### Field of the Disclosure

The present disclosure relates to a battery system with a compensator, a method of compensating the battery system and a vehicle including the battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable (or secondary battery) differs from a primary battery in that it is designed to be repeatedly charged and discharged, while the latter is designed to provide only an irreversible conversion of chemical to electrical energy. Low-capacity rechargeable batteries are used as a power supplies for small electronic devices, such as cellular phones, notebook computers and camcorders, while high-capacity rechargeable batteries are used as a power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected together in series to provide a desired voltage. The battery modules may include submodules with a plurality of stacked battery cells and each stack includes cells connected in parallel that are, in turn, connected in series (*XpYs*) or cells connected in series that are, in turn, connected in parallel (*XsYp*)*.*

A battery management system, BMS, may protect the battery pack from operating outside its safe operating area. Operation outside the safe operating area may be indicated by overcurrent, over-voltage (during charging), over-temperature, under-temperature, over-pressure, and/or ground fault or leakage current detection. The BMS may prevent the battery from operating outside it's safe operating parameter by including an internal switch (e.g., a relay or solid-state device) which is opened if the battery is operated outside its safe operating parameters, requesting the devices to which the battery is connected to reduce or even terminate using the battery, and actively controlling the environment, such as through heaters, fans, air conditioning and/or liquid cooling.

The mechanical integration of such a battery pack incorporates suitable mechanical connections between the individual components, for examples, battery modules, and between them and a supporting structure of the vehicle. These connections are designed to must remain functional and save throughout the average service life of the battery system. Further, installation space and interchangeability standards must be met, especially in mobile applications.

Mechanical integration of battery modules may be achieved by providing a carrier framework and by positioning the battery modules thereon. Fixing the battery cells or battery modules may be achieved by using fitted depressions in the framework or by mechanical interconnectors such as bolts or screws. In other example, the battery modules are confined by fastening side plates to lateral sides of the carrier framework. Moreover, cover plates may be fixed atop and below the battery modules.

The carrier framework of the battery pack is mounted to a carrying structure of the vehicle. When the battery pack is fixed at the bottom of the vehicle, the mechanical connection may be established from the bottom side by for example bolts passing through the carrier framework of the battery pack. The framework is generally made of aluminum or an aluminum alloy to lower the total weight of the construction.

Battery systems include a plurality of battery cells and/or battery modules. The battery cells have a specific tolerance chain from the production itself. In a conventional setting, the plurality of battery cells is stacked, squeezed and then put into a respective compartment. However, over the lifetime and during charging or discharging the width of battery cells increases (swelling). This swelling applies an additional force on the battery cells or compartment. Therefore, such swelling can lead to an early failure or to a reduction of the useable energy density of the entire battery system.

Thus, a compensation system is required that can be used to improve the application of an additional force which increases the lifetime of the battery cells and of the battery system.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided including at least one battery cell stack having a plurality of battery cells accommodated in a compartment. The battery system includes at least one compensator, each located at an end of a respective battery cell stack. The at least one compensator includes a flexible membrane coupled to a membrane carrier to define a variable volume that is filled with a fluid. The flexible membrane is further configured to expand in response to the fluid pressure rising in the at least one compensator and contract in response to the fluid pressure reducing at least one compensator. One among at least one compensator is positioned at the end of the at least one battery cell stack to exert a pressing force on the at least one battery cell stack.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic side view of a battery system according to an embodiment;
- Fig. 2: illustrates a schematic top view of a battery system according to an embodiment;
- Fig. 3: illustrates a schematic cross-sectional view of a battery system including a compensator according to an embodiment;
- Fig. 4: illustrates a schematic cross-sectional view of a battery system including a compensator according to another embodiment;
- Fig. 5: illustrates a schematic cross-sectional view of a battery system including a compensator according to another embodiment;
- Fig. 6: illustrates a schematic side view of a battery system according to another embodiment; and
- Fig. 7: illustrates a schematic diagram of a method of filling the battery system according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present. Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

### General Concept

According to one aspect of the present disclosure, a battery system is provided. The battery system includes at least one battery cell stack or battery module including a plurality of battery cells accommodated in a compartment. At least one compensator, wherein each of the at least one compensator is located at an end of a respective battery cell stack. The at least one compensator includes a flexible membrane coupled to a membrane carrier to define a variable volume that is filled with a fluid. The flexible membrane is configured to expand in response to the fluid pressure rising in the at least one compensator and contract in response to the fluid pressure reducing the at least one compensator. One among at least one compensator is positioned at the end or between ends of at least one battery cell stack to exert a pressing force on the at least one battery cell.

The battery cell stack including a plurality of battery cells accommodated in a compartment may also be referred to as a battery module. The end may be an end plate of the compartment or an end portion separating two or more battery stacks in one compartment. Expanding may mean in other words increasing the volume and contracting may mean decreasing the volume. The flexible membrane may be of a flexible material such as a flexible plastic or a flexible rubber material, but the invention is not restricted thereto. The membrane may have a thin skin or material layer. The membrane may be curved to at least partially define an internal space in which the fluid can be at least partially contained or collected.

The compression force generated by the flexible membrane filled with the fluid, exerting pressure on the battery cell stack, can equalize tolerances in the battery cell stack and can equalize the swelling of the battery cells due to aging or due to charging/discharging. This is achieved by the fluid which exerts a pressing force acted onto the battery cell stack by the flexible membrane. The pressing force provided by the membrane leads to an increase of battery lifetime of the battery system.

According to an embodiment, the battery system includes a plurality of compensators which are fluid-connected with respect to each other, e.g., by a fluid manifold. The fluid manifold may be a reservoir, a fluid channel or a fluid plate. The fluid manifold may be part of a fluid flow circuit. Due to the fluid-connection between the compensators, the pressing force can be equalized between different battery stacks. Further, a filling or refilling process is simplified since not each compensator needs to be filled or refilled separately.

According to an embodiment, the fluid manifold is a cooling manifold or a cooling plate which is fluid-connected with the plurality of compensators and the fluid is a coolant. Thus, in this case existing structures of a battery system, namely the cooling plate included in a cooling circuit, can be used to provide the work medium for the compensator. Therefore, additional space is saved when using the coolant from the cooling plate. Thus, the battery system can also be easily retrofitted into existing systems.

According to an embodiment, the compensator includes a fluid inlet including an inflow one-way valve configured to allow fluid to flow into the flexible membrane when a pressure difference across the fluid inlet is above a first opening pressure. The fluid outlet includes an outflow one-way valve configured to allow fluid to flow out of the flexible membrane when a pressure difference across the fluid outlet is above a second opening pressure. The first opening pressure of the inflow one-way valve is lower than the second opening pressure of the outflow one-way valve.

The opening pressure is a valve property and can be set in advance. The fluid inlet and the fluid outlet may be formed in the membrane carrier. With the above configuration of using two different valves as explained above, a hysteresis-effect can be created, which can stabilize the fluid flow variations. For example, the fluid in the flexible membrane may have a pressure z being between the first opening pressure x and the second opening pressure y. Then, the inflow one-way valve is opened and the outflow one-way valve is closed. In this case, a pressure force is applied to the at least one battery cell stack. When now an overpressure u>y occurs due to swelling in the battery stack, the overpressure is relieved by the fluid outlet of the outlet one-way valve. Thus, the second opening pressure y serves as an overpressure protection as it defines an upper maximum pressure boundary. Assumed that the swelling decreases again, the pressure u will again reduce within the hysteresis, i.e. x < z < y. Thus, suitable operating conditions can be set for the battery system including the two one-way valves. Even if the filling pressure (ambient pressure) is not be at present anymore, the battery stack would still be under tension due to the lower boundary x (first opening pressure) preventing an outflow of the fluid at lower pressure thereby retaining a low amount of fluid in the membrane. This ensures a residual pressure x exerted on the battery cell stack. Thus, the embodiment helps to compensate a change in length during aging or charging/discharging and includes an overpressure protection feature due to the pressure boundary y and a fluid retaining feature due to the pressure boundary x.

According to an embodiment, a normal filling or work pressure is between the first opening pressure and the second opening pressure. In this normal case, a pressure is applied to the at least one battery cell stack. This brings the battery system into a normal state/operation that benefits from the boundaries as described above. To provide stabile operation conditions, the difference, i.e. the hysteresis, of the first opening pressure x and the second opening pressure y should be made suitably large.

According to an embodiment, each of the inflow and outflow one-way valves include a ball check valve including a spring and a ball member connected to the spring. The ball member is configured to close the respective fluid inlet or fluid outlet when the pressure difference is below the respective predetermined pressure difference. Thus, the opening pressures are generated by the elastic spring. Correspondingly, the elastic properties (i.e. stiffness) of the springs can be predetermined to define the relation of the first opening pressure x and the second opening pressure y as described above. For example, the stiffness of the spring belonging to the inflow one-way valve may be set lower than the stiffness of the outflow one-way valve.

According to an embodiment, the fluid inlet and the fluid outlet are provided on a side wall of the membrane carrier, wherein the fluid manifold includes a vertical connecting section which is fluid connected to the fluid inlet and the fluid outlet. Thus, the configuration with having two one-way valves can be easily integrated by using a side space. The vertical connecting section extends in a height direction of the battery cell stack.

According to an embodiment, the compensator includes a vertical inlet disposed between the fluid manifold being planar and the flexible membrane, wherein the vertical inlet includes a direct channel connecting the fluid manifold with the flexible membrane. Due to the direct channel to the interior of the flexible membrane, an overpressure pressure can be directly and automatically distributed. Further, due to the vertical inlet a lateral space can be saved which results in a more space efficient configuration. In addition, pressure regulation of overpressure in a battery stack is directly distributed over the entire fluid system without any valve being required.

According to an embodiment, the vertical inlet has a con shape. This provides a stable configuration, as the cone shape ensures a tight seal when a pressure force is applied.

According to an embodiment, the membrane carrier includes two protruding portions protruding toward the battery cell stack. The portions are separated in a height direction (or vertically), wherein the flexible membrane is coupled to the membrane carrier so that the fluid is filled in the variable volume of the flexible membrane and in a fixed space formed between the horizontally protruding portions. This configuration may not only provide a stable support for the flexible membrane, but also allows that the contact area to the battery cell stack can be increased due to a lower curvature contact of the membrane. This can be used to achieve a more homogenous force entry onto the corresponding battery cell stack.

According to an embodiment, the end of the battery stack includes an end plate, wherein the end plate is installed to be movable with respect to the at least one compensator. This allows to optimize by guiding of the end plates a more homogeneous contact and a more effective pressure force transfer to the battery cell stack.

According to an embodiment, a position control unit is configured to adjust the position of the end plate with respect to the compensator. Thus, a more homogenous pressure force across onto the battery cell of the battery cell stack may be achieved. For example, the contact area may be increased between the flexible membrane and the battery cell stack. The adjustment may be based on contact area measurements or press force determination.

According to an embodiment, one of the at least one compensator is located between two ends of adjacent battery cell stacks to exert a pressing force on both battery cell stacks based on the fluid pressure in the flexible membrane. This allows to even replace separators or spacer between the battery cell stacks so that those function can be taken over by the compensator.

According to an embodiment, a method of filling the battery system according to the above embodiment is provided. The method includes the step of filling the flexible membrane with a pressure that is between the first opening pressure and the second opening pressure. Thus, the battery system is brought into an operation state in which pressure force is provided on the battery cell stacks and which is within the hysteresis as explained above.

The method may further include the step of refilling the flexible membrane with a normal pressure that is between the first opening pressure and the second opening pressure, when the pressure in the membrane dropped below the first opening pressure. Thus, stable operation conditions can be maintained by a refilling process.

According to an embodiment, a vehicle including a battery system according to any of the above amendments.

### Specific Embodiments

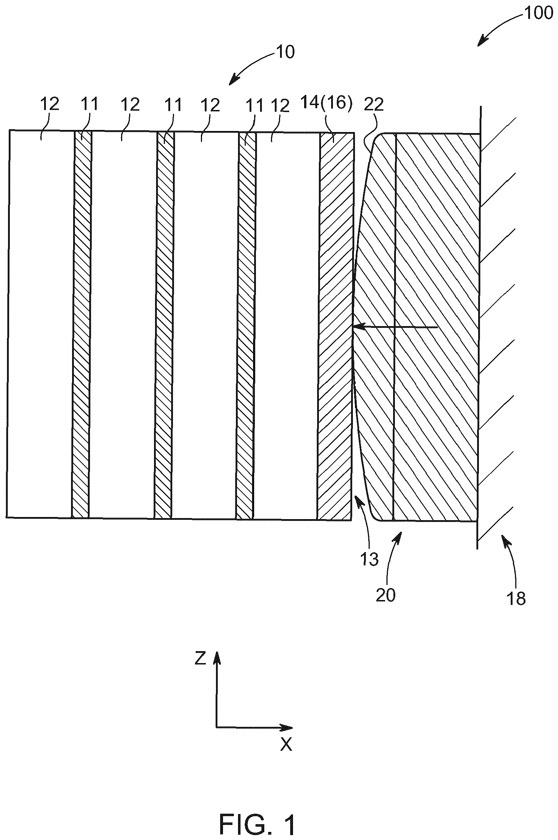

Fig. 1 illustrates a schematic side view of a battery system 100 according to an embodiment. The battery system 100 includes at least one battery cell stack 10. Each of the at least one battery cell stack 10 includes a plurality of battery cells 12. For example, as shown in Fig. 1, prismatic battery cells 12 may be provided and stacked correspondingly. These battery cells 12 are accommodated in a compartment 16 (or frame) to form a battery module. From the compartment 16 only an end plate 14 is illustrated in the Figures and the portions of the compartment 16. Between the battery cells 12, a plurality of spacers 11 may be provided as illustrated in Fig. 1. Further, a housing 18, i.e., here merely a side wall thereof, may be provided in which the battery cell stack 10 is integrated. However, the positioning is not restricted to the boundary of the housing 18. The end plate 14 provides a boundary of the battery cell stack 10 while the other frame portions are not illustrated in the present schematic view.

The battery system 100 further includes at least one compensator 20. The compensator 20 is located at an end 13 of the battery cell stack 10. In the present case, the compensator 20 is provided at the end plate 14 of the battery cell stack 10. In further embodiments, the compensator 20 can be disposed directly at a battery cell 12, i.e., at a main surface thereof.

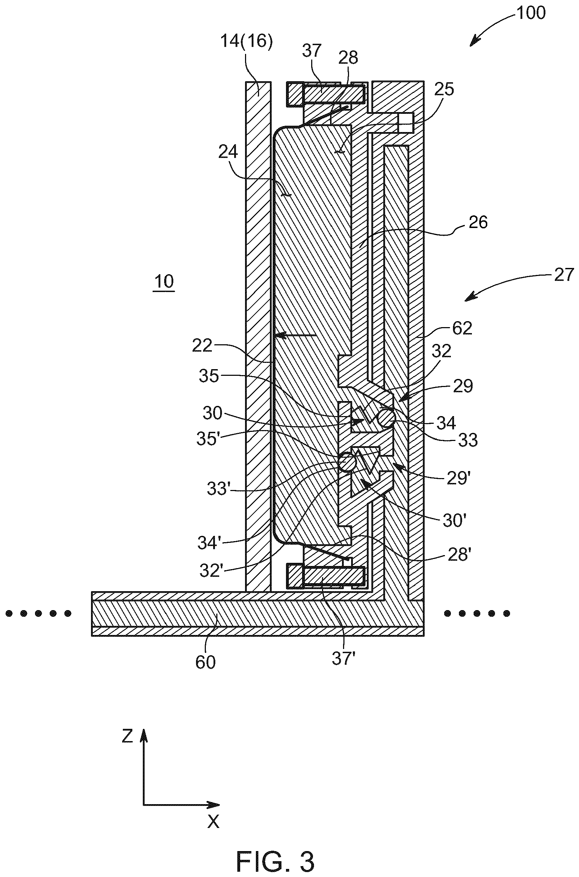

As indicated in Fig. 1, the compensator 20 includes a flexible membrane 22. The flexible membrane 22 may be coupled to a membrane carrier 26, see Figs. 3 to 5. The membrane carrier 26 (support) may be located at the end 13, i.e. at the end plate 14, of the battery cell stack 10. The flexible membrane 22 together with the membrane carrier 26 define a variable volume 24 that is filled with a fluid. For example, the fluid may be water, but the invention is not restricted thereto.

The flexible membrane 22 is configured to expand in response to the fluid pressure rising in the compensator 20. Thus, when the pressure increases in the compensator 20, the variable volume 24 of the compensator 20 increases. Similarly, the flexible membrane 22 contracts in response to the fluid pressure reducing in the compensator 20. Thus, when the pressure decreases in the compensator 20, the variable volume 24 of the compensator 20 reduces. In accordance with the above, the compensator 20 is positioned at the end 13 of the at least one battery cell stack 10 to exert a pressing force on the battery cell stack 10. Thus, the pressing force applied on the battery cell stack 10 depends on the fluid pressure in the compensator 20.

Due to the flexible membrane 22 and the pressure-sensitivity, an adjustable pressure force can be applied to the battery stack so that tolerances can be equalized by the fluid-containing compensator 20 including the flexible membrane 22 and swelling counterbalanced by the pressing force.

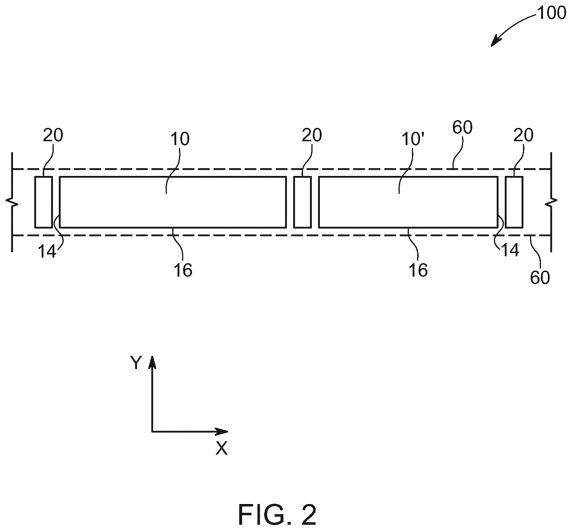

Fig. 2 illustrates a schematic top view of a battery system 100 according to an embodiment. In this embodiment, it is illustrated that the battery system 100 includes a plurality of compensators 20. The plurality of compensators 20 are fluid-connected with respect to each other by a fluid manifold 60, which is only schematically illustrated in Fig. 2. The compensators 20 may be positioned at end plates 14 or directly at one or more battery cells 12 at an end of a battery cell stack 10. Since the plurality of compensators 20 are fluid-connected with respect to each other by a fluid manifold 60, the compensation force between different battery cell stacks 10, 10' can be equalized in this embodiment.

Further, the fluid manifold 60 as illustrated in Fig. 2 may be a cooling manifold. Thus, the fluid may be a coolant liquid like water but the invention is not restricted thereto. In consequence, existing structures of the battery system 100 can be used for cooling and to provide the work fluid for the flexible membrane 22 and exert the pressure force on the battery system 100. This increases compactness and retrofitting.

Fig. 3 illustrates a schematic cross-sectional view of a battery system 100 including a compensator 30 according to an embodiment. The compensator 30 includes a fluid inlet 29. The fluid inlet 29 is formed in the membrane carrier 26 (membrane support). The membrane carrier 26 includes an inflow one-way valve 30. The inflow one-way valve 30 is configured to allow fluid to flow into the flexible membrane 22 when a pressure difference across the fluid inlet 29 is above a first opening pressure x. Further, the inflow one-way valve 30 is configured to prevent the fluid from flowing out of the flexible membrane 22 through the one-way valve 30.

Referring to Fig. 3, the fluid outlet 29' includes, similarly to the paragraph above, an outflow one-way valve 30'. The outflow one-way valve 30' is configured to allow fluid to flow out of the flexible membrane 22 when a pressure difference across the fluid outlet 29' is above a second opening pressure y. Further, the outflow one-way valve 30' is configured to prevent the fluid from flowing into the flexible membrane 22.

Further, as will be explained further below, the predetermined first opening pressure x of the inflow one-way valve 30 is lower than the second opening pressure y of the outflow one-way valve 30'. Thus, in this embodiment, the one-way valves 30, 30' are configured differently and open according to the applied pressure, i.e., the inlet one-way-valve 30 has a lower first opening pressure x than the second opening pressure y of the outlet one-way valve valves 30'. A swelling of the battery cells 12 can be effectively relieved as described in the following by creating a hysteresis effect which will be explained for illustration below.

Assumed that the fluid in the flexible membrane 22 has a pressure z being between first opening pressure x and second opening pressure y, e.g., as the target pressure of a filling process. In this case, the inflow one-way valve 30 is opened and the outflow one-way valve 30' is closed. The compensator 20 is then in a pressure balance with the cooling manifold 60 and applies a pressing force onto the battery cell stack 10.

Further, when an overpressure u is caused, e.g., due to the swelling of the battery cells 12 in the battery stack 10, this overpressure u may be greater than the second opening pressure y. In this case, excess pressure is relieved by the fluid outlet 29' of the outlet one-way valve 30' and distributed over the system. Thus, an over pressure protection is realized by accordingly setting the second opening pressure y. Further, when

Further, when the swelling decreases again, the pressure z will again be within the hysteresis, i.e. x < z < y, so that a default or normal state is reestablished. In case the pressure in the battery stack is below the first opening pressure x, a refilling process may be provided. Even if the filling pressure (ambient pressure) is not be at present anymore, the battery cell stack 10 would still be under tension due to the lower boundary x (first opening pressure) preventing an outflow of the fluid at lower pressure thereby retaining a low amount of fluid in the membrane. This ensures a residual pressure x exerted on the battery cell stack.

In a normal operation, it is therefore the normal setting to set the pressure z of the fluid stack to be between first opening pressure x and second opening pressure y. To provide stabile operation conditions, the difference of the first opening pressure x and second opening pressure y should be made substantially large.

Thus, the configuration with the two one-way valves 30, 30' facilitates length compensation in the battery cell stack 10, as well as compensating for the change in length during the aging (swelling) or charging/discharging process. Further, it prevents overpressure due to the upper pressure bound and also retains a residual pressure so that even with no ambient pressure (filling pressure) a pressing force is provided.

The above conditions may be realized as illustrated in Fig. 3. I.e., each of the inflow and outflow one-way valves 30, 30' provides a ball check valve. The ball check valve includes a spring 32, 32' and a ball member 33, 33' connected to the spring 32, 32', which is indicated in Fig. 3 above. The ball member 33, 33' is configured to close the respective fluid inlet or fluid outlet 29, 29' when the pressure difference is below the respective predetermined opening pressures x, y.

The fluid inlet 29 and the fluid outlet 29' may form chambers in which the ball check valve is integrated. For example, a constriction 34, 34' may be provided in which the ball member 33, 33' is pressed or seated by the spring 32, 32'. The spring 32, 32' may be mounted at an opposing wall 35, 35' in the chamber opposite to the constriction 34, 34' to provide the elastic pressing force against the constricted opening. As pointed out above, the spring 32 may have a lower stiffness than the spring 32', as an example, to provide the relations as noted above for creating the hysteresis.

In addition, the flexible membrane 22 is fixed to the membrane carrier 26. In particular, ends of the flexible membrane 22 may be coupled to the membrane carrier 26 by way of a bolt/screw 37, 37' as indicated in Fig. 3.

Further, the fluid inlet and the fluid outlet 29, 29' are provided on a side wall 27 of the membrane carrier 26. Further, the fluid manifold 60 includes a vertical connecting section 62 which is fluid connected to the fluid inlet and the fluid outlet 29, 29'. Thus, a horizontal inlet is provided by the above configuration that uses the lateral space to provide stable connection for the two inlet and outlet one-way valves 30, 30'.

In addition, the membrane carrier 26 includes two protruding portions 28, 28' protruding toward the battery cell stack 10 and being separated from each other in a height direction (here z-direction). The flexible membrane 22 is coupled to the membrane carrier 26 so that the fluid is filled in the variable volume 24 of the flexible membrane 22 and in a fixed space 25 formed between the protruding portions 28, 28'. Thus, the flexible membrane 22 only has to cover a half-space and is stably supported by the membrane carrier 26. In addition, a more homogeneous pressure force can be applied to the corresponding battery cell stack 10, 10', i.e., the curvature of the flexible membrane 22 may be smaller. Thus, a larger (side) area of the battery cell stack 10, 10' receives a pressing force to improve the effective contact.

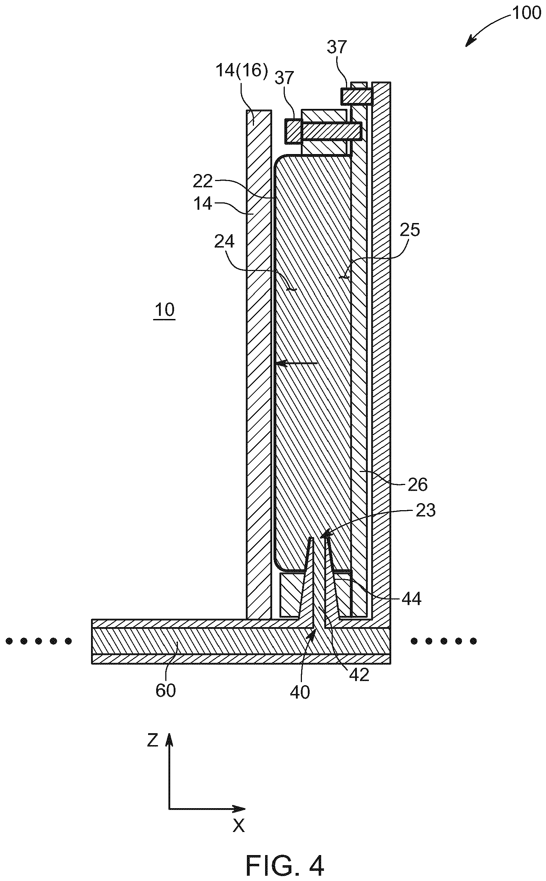

Fig. 4 illustrates a schematic cross-sectional view of a battery system 100 according to another embodiment of the compensator 20. In this embodiment, only the differences to Fig. 3 are described and for common features it is referred to the description of the previous embodiments.

The compensator 20 includes a vertical inlet 40 (i.e., extending in a height direction of the battery cell stack 10, 10') located between the fluid manifold 60 and the flexible membrane 22. In particular, the fluid manifold 60 is formed below the battery cell stack 10, 10' as shown in the various Figures. The vertical inlet 40 includes a direct channel 42 connecting the fluid manifold 60 with the flexible membrane 22. In this case, a membrane opening 23 is provided at the vertical inlet 40 to let fluid pass and enter the variable volume 24. Thus, no additional valves are used in this embodiment. Since the vertical inlet 40 includes a direct channel 42 to the interior of the flexible membrane 22, an overpressure is directly and automatically regulated. Thus, when a pressure of the battery cell stack 10, 10' rises, this over pressure is directly released and distributed. Further, due to the vertical inlet 40 a lateral space can be saved to allow compact integration. In addition, pressure regulation of overpressure in a battery stack 10, 10' is directly distributed over the entire fluid system without any valve being required. Further, as can be seen in Fig. 4, the vertical inlet 40 has a cone shape, the cone 44 or cone-shaped surface of the vertical inlet 40 being indicated in Fig. 4. This cone 44 or cone-shaped surface ensures a tight seal when a pressure force is applied.

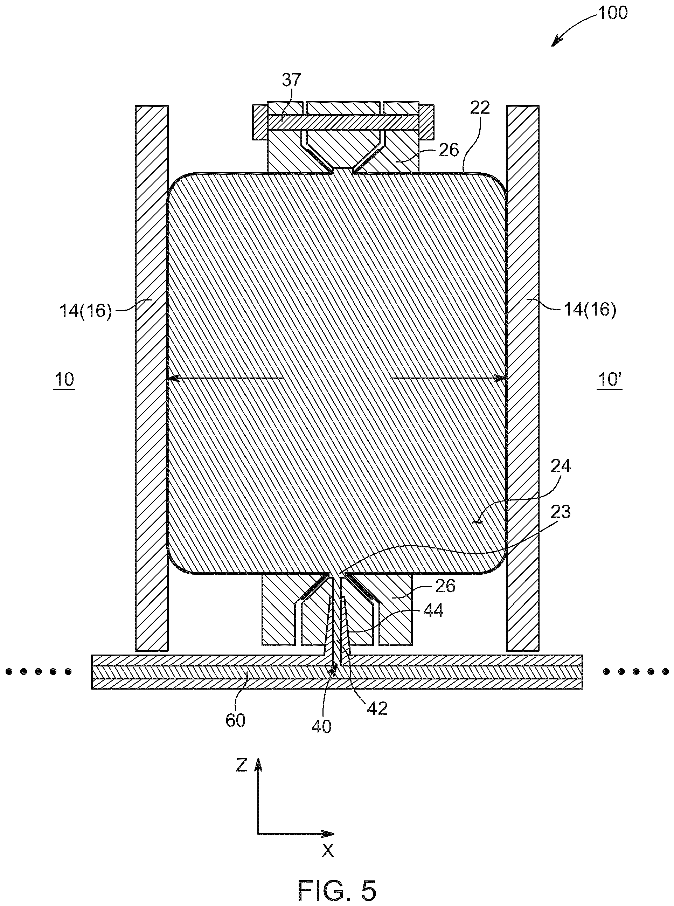

Fig. 5 illustrates a schematic cross-sectional view of a battery system 100 according to another embodiment. The compensator 20 in this embodiment is located between two ends 13 of adjacent battery cell stacks 10, 10 so that the flexible membrane 22 exerts a pressing force on both battery cell stacks 10, 10' based on the fluid pressure in the flexible membrane 22. In this case, the membrane carrier 26 can be centrally disposed between the end plates 14. Thus, a pressure force on both battery cell stacks 10, 10' can be applied as illustrated in Fig. 5. Similar to Fig. 4, a vertical inlet 40 is provided as explained already in Fig. 4. However, in other embodiments, also the features as described with respect to Fig. 3 can be provided for the central positioning as described in the present Fig. 3 to apply a pressure force in both directions.

In here, the end plates 14 are provided but the compensator 20 may also be directly in direct contact with a main surface of a battery cell 12.

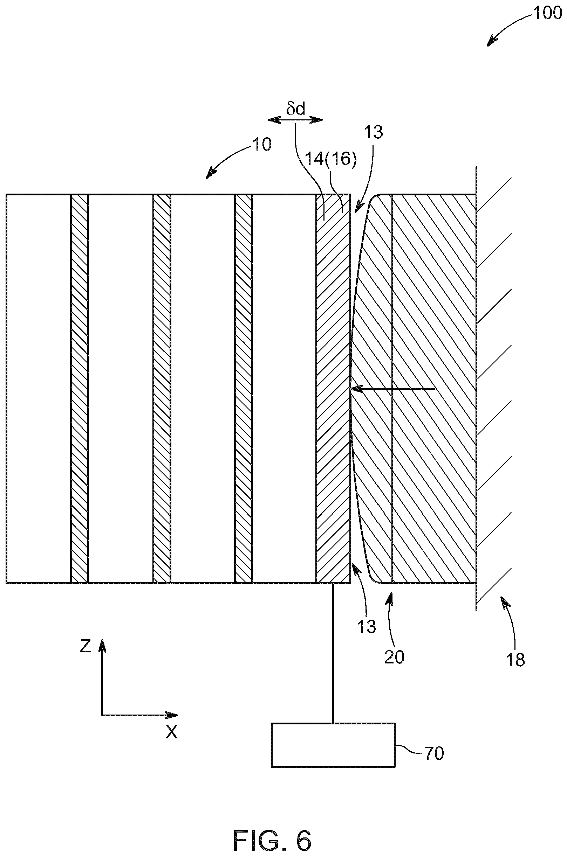

Fig. 6 illustrates a schematic side view of a battery system 100 according to another embodiment. In this embodiment, only the differences with respect to Fig. 1 are explained. For the features in common with Fig. 1, it is referred to the corresponding description above. In this embodiment, the end plate 14 is installed to be movable with respect to the at least one compensator 20. Thus, the end plates 14 can be guided. For example, as illustrated in Fig. 6, a linear displacement ∂d of the end plate 14 may be controlled. This allows to set a constant pressure force across the area (main area) of the cell stacks 10, 10'. For example, a more homogeneous pressure can be provided by adjusting the relative position of the end plate 14 with respect to the compensator 20, i.e. the curved membrane 22 may contact in a batter manner with the end of the battery cell stack 10.

A position control unit 70 may be configured to adjust the position (by displacement) of the end plate 14 with respect to the compensator 20. For example, the adjustment may be based on a detected pressure force across an area of the cell stack 10 or by determining the contact area between the flexible membrane 22 with the area (main area) of the battery cell stack 10, 10'. Thus, force transmission can be optimized and can be combined with any of the above escribed embodiments.

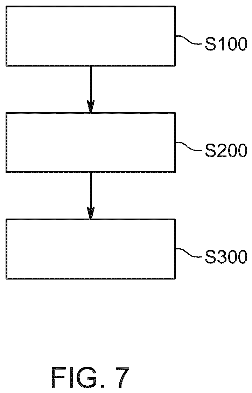

Fig. 7 illustrates a schematic diagram of a method of filling the battery system 100 according to an embodiment. The method includes the step of providing a battery system 100 comprising a compensator 20 (S100). The battery system 100 is described with the various embodiments of Fig. 3 including the inflow one-way-valve 30 and the outflow one-way-valve 30'.

In a further step, the method includes the step of filling the compensator 20 with a pressure between the first opening pressure x (of the inflow one-way-valve 30) and the second opening pressure y (outflow one-way-valve 30') (S200). Thus, the normal operation state of the battery system 100 is provided as described with respect to Fig. 3 and each battery stack 10, 10' is placed under compression force.

The method may further include the step of refilling the compensator 20 with the pressure between the first opening pressure x and the second opening pressure y (S300). This is performed when the pressure in the compensator 20 caused by the battery stack 10, 10' has dropped below the first opening pressure x. A pressure sensor (here not shown) may be used to monitor the pressure and to activate a pump/refill mechanism to reestablish the normal operating state.

Thus, this method ensures that the battery system 100 maintains in the normal/working state and the battery stacks 10, 10' remain under compression pressure. For example, a pressure control by the pressure sensor may be performed to automatically detect when to refill and to cause a pump for reestablishing the pressure force acting on the battery stacks 10, 10'.

In summary, a battery system 100 according to various embodiments is provided with at least one compensator 20 which can apply a compression force on at least one battery stack 10, 10' using fluid pressure. This mechanism allows for tolerance equalizing and swelling compensation. According to various embodiments, the compression is provided via multiple connected compensators. This allows for coherent compression of even different battery cell stacks 10, 10' and improves operability of the battery system 100 as detailed in the embodiments presented above.

### Reference signs

- 100: battery system

- 10: battery cell stack
- 10': battery cell stack
- 11: spacer
- 12: battery cells
- 13: end
- 14: end plate
- 16: compartment
- 18: housing / housing wall

- 20: compensator
- 22: flexible membrane
- 23: membrane opening
- 24: variable volume
- 25: fixed space
- 26: membrane carrier
- 27: side wall
- 28: protruding portion
- 28': protruding portion
- 29: fluid inlet
- 29': fluid outlet

- 30: inflow one-way-valve
- 30': outflow one-way-valve
- 32: spring
- 32': spring
- 33: ball member
- 33': ball member
- 34: constriction
- 34': constriction
- 35: opposing wall
- 35': opposing wall
- 37: bolt/screw
- 37': bolt/screw

- 40: vertical inlet
- 42: direct channel
- 44: cone

- 60: fluid manifold
- 62: vertical connecting section

- 70: position control unit

- S100: providing
- S200: filling
- S300: refilling

## Claims

1. A battery system (100), comprising:
at least one battery cell stack (10, 10') comprising a plurality of battery cells (12) accommodated in a compartment (16); and
at least one compensator (20) each located at an end (13) of a respective battery cell stack (10, 10');
wherein the at least one compensator (20) comprises a flexible membrane (22) coupled to a membrane carrier (26) to define a variable volume (24) that is filled with a fluid;
wherein the flexible membrane (22) is configured to expand in response to the fluid pressure rising in the at least one compensator (20) and contract in response to the fluid pressure reducing in the at least one compensator (20); and
wherein one among at least one compensator (20) is positioned at the end (13) of the at least one battery cell stack (10) to exert a pressing force on the at least one battery cell stack (10).

2. The battery system according to claim 1, wherein the at least one compensator (20) is fluid-connected with respect to each other by a fluid manifold (60).

3. The battery system according to claim 2, wherein the fluid manifold (60) comprises a cooling plate fluid-connected with the at least one compensator (20) and wherein the fluid is a coolant.

4. The battery system according to any of the preceding claims, wherein the compensator (20) includes a fluid inlet (29) including an inflow one-way valve (30) configured to allow fluid to flow into the flexible membrane (22) when a pressure difference across the fluid inlet (29) is above a first opening pressure (x); and
a fluid outlet (29') comprising an outflow one-way valve (30') configured to allow fluid to flow out of the flexible membrane (22) when a pressure difference across the fluid outlet (29') is above a second opening pressure (y), wherein the first opening pressure (x) of the inflow one-way valve (30) is lower than the second opening pressure (y) of the outflow one-way valve (30').

5. The battery system according to claim 4, wherein a normal filling pressure (z) is between the first opening pressure (x) and the second opening pressure (y).

6. The battery system according to any of the claims 4 to 5, wherein each of the inflow and outflow one-way valves (30, 30') comprises a ball check valve comprising a spring (32, 32') and a ball member (33, 33') connected to the spring (32, 32'), wherein the ball member (33, 33') is configured to close the respective fluid inlet or fluid outlet (29, 29') when the pressure difference is below the respective opening pressure (x, y).

7. The battery system according to any of the claims 4 to 6, wherein the fluid inlet and the fluid outlet (29, 29') are provided on a side wall (27) of the membrane carrier (26), wherein the fluid manifold (60) comprises a vertical connecting section (62) which is fluid-connected to the fluid inlet and the fluid outlet (29, 29').

8. The battery system according to any of the claims 2 to 3, wherein the compensator (20) comprises a vertical inlet (40) between the fluid manifold (60) and the flexible membrane (22), wherein the vertical inlet (40) comprises a direct channel (42) connecting the fluid manifold (60) with the flexible membrane (22).

9. The battery system according to claim 8, wherein the vertical inlet (40) has a cone shape.

10. The battery system according to any of the claims 4 to 9, wherein the membrane carrier (26) comprises two protruding portions (28, 28') separated in a height direction and protruding toward the battery cell stack (10) and the flexible membrane (22) is coupled to the membrane carrier (26) so that the fluid is filled in the variable volume (24) of the flexible membrane (22) and in a fixed space (25) formed between the protruding portions (41).

11. The battery system according to any of the claims 1 to 10, wherein the end (13) of the battery stack (10) comprises an end plate (14), wherein the end plate (14) is installed to be movable with respect to the at least one compensator (20).

12. The battery system according to claim 11, further comprising a position control unit (70) configured to adjust the position of the end plate (14) with respect to the compensator (20).

13. A method of compensating the battery system according to claims 4 to 7, comprising the step of filling the compensator (20) with a pressure between the first opening pressure (x) and the second opening pressure (y) (S200).

14. The method of according to claim 13, further comprising the step of refilling the compensator (20) with the pressure between the first opening pressure (x) and the second opening pressure (y), when the pressure in the flexible membrane (22) dropped below the first opening pressure (x) (S300).

15. A vehicle comprising the battery system according to any one of the claims 1 to 12.

## Amended claims

### Amended claims in accordance with Rule 137(2) EPC.

1. A battery system (100), comprising:
at least one battery cell stack (10, 10') comprising a plurality of battery cells (12) accommodated in a compartment (16); and
at least one compensator (20) each located at an end (13) of a respective battery cell stack (10, 10');
wherein the at least one compensator (20) comprises a flexible membrane (22) coupled to a membrane carrier (26) to define a variable volume (24) that is filled with a fluid;
wherein the flexible membrane (22) is configured to expand in response to the fluid pressure rising in the at least one compensator (20) and contract in response to the fluid pressure reducing in the at least one compensator (20); and
wherein one among at least one compensator (20) is positioned at the end (13) of the at least one battery cell stack (10) to exert a pressing force on the at least one battery cell stack (10),
**characterized in that**,
wherein the at least one compensator (20) comprises a plurality of compensators (20) fluid-connected with respect to each other by a coolant manifold (60) and the fluid being a coolant,
wherein the compensator (20) includes a fluid inlet (29) including an inflow one-way valve (30) configured to allow fluid to flow from the coolant manifold (60) into the flexible membrane (22) when a pressure difference across the fluid inlet (29) is above a first opening pressure x; and
the compensator (20) includes a fluid outlet (29') comprising an outflow one-way valve (30') configured to allow fluid to flow out of the flexible membrane (22) into the coolant manifold (60) when a pressure difference across the fluid outlet (29') is above a second opening pressure y, wherein the first opening pressure x of the inflow one-way valve (30) is lower than the second opening pressure y of the outflow one-way valve (30').

2. The battery system according to claim 1, wherein a work pressure z is between the first opening pressure (x) and the second opening pressure y.

3. The battery system according to any of the claims 1 to 2, wherein each of the inflow and outflow one-way valves (30, 30') comprises a ball check valve comprising a spring (32, 32') and a ball member (33, 33') connected to the spring (32, 32'), wherein the ball member (33, 33') is configured to close the respective fluid inlet or fluid outlet (29, 29') when the pressure difference is below the respective opening pressure x, y.

4. The battery system according to any of the claims 1 to 3, wherein the fluid inlet and the fluid outlet (29, 29') are provided on a side wall (27) of the membrane carrier (26), wherein the fluid manifold (60) comprises a vertical connecting section (62) which is fluid-connected to the fluid inlet and the fluid outlet (29, 29').

5. The battery system according to any of the claims 1 to 4, wherein the membrane carrier (26) comprises two protruding portions (28, 28') separated in a height direction and protruding toward the battery cell stack (10) and the flexible membrane (22) is coupled to the membrane carrier (26) so that the fluid is filled in the variable volume (24) of the flexible membrane (22) and in a fixed space (25) formed between the protruding portions (41).

6. A method of compensating the battery system according to claims 1 to 5, comprising the step of filling the compensator (20) with a work pressure between the first opening pressure x and the second opening pressure y (S200).

7. The method of according to claim 6, further comprising the step of refilling the compensator (20) with the pressure between the first opening pressure x and the second opening pressure y, when the pressure in the flexible membrane (22) dropped below the first opening pressure (x (S300).

8. A vehicle comprising the battery system according to any one of the claims 1 to 5.
